Europäisches Patentamt

European Patent Office

Office européen des brevets

(11) Numéro de publication: **0 039 302**

**A1**

## (12) DEMANDE DE BREVET EUROPEEN

(21) Numéro de dépôt: **81420063.0**

(22) Date de dépôt: **27.04.81**

(51) Int. Cl.³: **G 09 B 29/00**
**G 09 F 7/06**

(30) Priorité: **28.04.80 FR 8010113**

(43) Date de publication de la demande:
**04.11.81 Bulletin 81/44**

(84) Etats contractants désignés:
**DE GB IT**

(71) Demandeur: **VAL-REX Société anonyme:**
**Chemin de la Barthelasse B.P. 8**
**F-84600 Valreas(FR)**

(72) Inventeur: **Tourre, Raymond**
**Rue du Palais Royal**
**F-84100 Orange(FR)**

(74) Mandataire: **Ropital-Bonvarlet, Claude et al,**
**Cabinet BEAU DE LOMENIE 99, Grande rue de la**
**Guillotière**
**F-69007 Lyon(FR)**

(54) **Plaquette adaptable sur un panneau de présentation de fiches en T en vue de la constitution de gouttières ou gorges profondes.**

(57) - Organisation et information visuelle.
- Le plaquette est constituée sous la forme d'un corps plan 6 qui comporte
- sur ses bords verticaux deux pattes d'assemblage 9 et 10 mutuellement complémentaires,
- et au niveau du bord inférieur 19 une barrette 20 destinée à s'engager dans une fente d'un tableau.
- Application aux tableaux de présentation de fiches en T.

Fig-4

EP 0 039 302 A1

1

<u>Plaquette adaptable sur un panneau de présentation de fiches en T en
vue de la constitution de gouttières ou gorges profondes :</u>

La présente invention vise le domaine des panneaux ou tableaux
de présentation d'informations visualisées et le domaine technique
concerné est, plus particulièrement, celui des panneaux ou tableaux
comportant des logements en forme de crevés destinés à recevoir
des fiches ou autres supports de présentation d'informations.

Les panneaux du type ci-dessus sont conformés de manière à
posséder des plages et / ou colonnes verticales parallèles entre
elles de fentes horizontales ou de crevés généralement alignés selon
des mêmes niveaux et destinés à recevoir des supports et notamment des fiches dites en T, c'est-à-dire comportant en tête une
plage de plus grande largeur que le corps proprement dit de la
fiche.

L'utilisation d'un tel tableau consiste à disposer les supports ou
fiches dans les fentes, selon un ordre prédéterminé dans le sens
vertical, dans le sens horizontal, ou encore au point d'intersection de coordonnées rectangulaires de référence.

Toute modification dans le classement des fiches implique, par
conséquent, pour chaque fiche considérée, l'extraction de la fente
initialement occupée et la remise en place dans la nouvelle fente
correspondant au nouveau positionnement.

Les tableaux du type ci-dessus donnent entière satisfaction pour
la présentation d'informations répondant aux critères de sélection,
d'identification, ou de positionnement énumérés ci-dessus.

Cependant, dans certains cas, il convient de pouvoir faire suivre
un cheminement linéaire continu à une ou plusieurs informations
entre une origine et un terme, en rapport avec, par exemple, une
base chronologique.

E tant donné que les fentes de chaque plage ou colonne verticale sont limitées et séparées pour celles d'un même niveau présentées par deux colonnes ou pages contigues, la mise en oeuvre d'un tel panneau pour une présentation d'informations à développement linéaire continu ne peut être envisagée.

La présente invention a pour objet de remédier à cet inconvénient en proposant une plaquette accessoire tout particulièrement conçue pour permettre la transformation, même locale, d'un panneau de présentation à base de fentes ou crevés en vue de la délimitation au moins partielle d'une ou plusieurs gorges ou gouttières continues profondes aptes à recevoir des fiches d'indications ou d'informations à développement linéaire continu.

L'objet de l'invention est donc d'offrir à l'utilisateur d'un tableau de présentation à base de fentes ou crevés la possibilité, s'il le souhaite, de transformer au moins partiellement un tel tableau de manière à pouvoir lui faire supporter des fiches, bandes ou supports divers à développement linéaire fixe ou mobile.

Un objet de l'invention est de rendre possible une telle transformation sans altérer la constitution du panneau de présentation qui peut donc éventuellement être réutilisé pour sa fonction première ou encore être modifié partiellement de manière à offrir une double utilisation possible pour la présentation locale de fiches et la présentation d'informations à développement linéaire horizontal.

Un autre objet de l'invention est de fournir à l'utilisateur une plaquette accessoire d'un prix de revient faible aisément et facilement adaptable sur un panneau de présentation et pouvant, éventuellement, être stockée facilement à plat sous un encombrement minimal.

Un objet supplémentaire de l'invention est de fournir, à l'utilisateur d'un panneau de présentation, une plaquette accessoire qui soit susceptible de former, après adaptation sur un panneau, soit une gouttière ou gorge de réception d'un support d'informations à développement linéaire, soit également une case de stockage de documents ou supports de format ou d'épaisseur incompatible avec les moyens d'engagement ou de réception normalement offerts par un tel tableau.

Conformément à l'invention, la plaquette adaptable sur un panneau de présentation offrant des plages verticales parallèles de fentes horizontales destinées à l'engagement de fiches ou supports est caractérisée en ce qu'elle est constituée sous la forme d'un corps plan dont la mesure horizontale est au moins égale à la longueur des fentes d'une plage et qui comporte

- sur ses bords verticaux latéraux deux parties d'assemblage mutuellement complémentaires,
- et au niveau de son bord inférieur une barrette décalée par rapport au plan de la face arrière du corps et destinée à s'engager dans une fente d'une plage d'un panneau, de manière que la face arrière dudit corps délimite alors avec la face avant du panneau une gouttière ou gorge de réception d'une fiche.

Diverses autres caractéristiques ressortent de la description faite ci-dessous en référence aux dessins annexés qui montrent, à titre d'exemples non limitatifs, deux formes de réalisation de l'objet de l'invention.

La fig. 1 est une perspective d'un tableau de présentation de fiches sur lequel l'objet de l'invention est adaptable.

La fig. 2 est une élévation de l'objet de l'invention,

La fig. 3 est une vue transversale prise selon la ligne III-III de la fig. 2.

La fig. 4 est une élévation latérale prise selon la ligne IV-IV de la fig. 3.

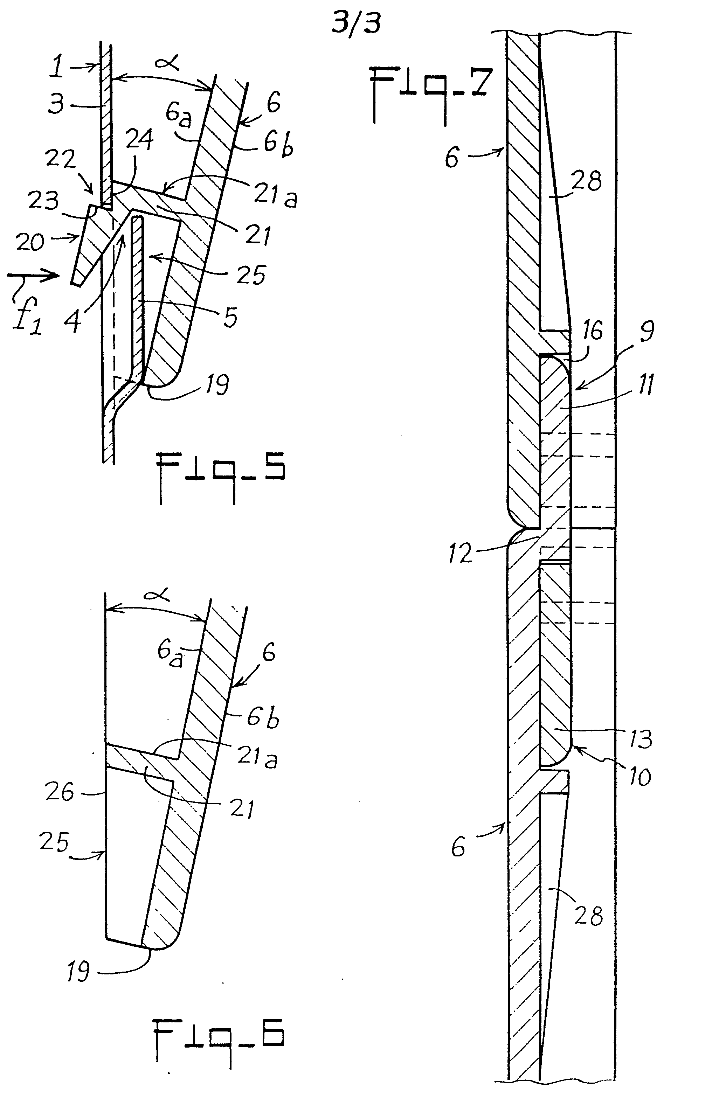

Les fig. 5 et 6 sont des coupes transversales prises, à plus grande échelle, selon les lignes V-V et VI-VI de la fig. 4.

La fig. 7 est une coupe transversale partielle montrant un détail de l'objet de l'invention.

L'objet de l'invention est destiné à permettre la transformation d'un tableau ou panneau 1 conçu pour permettre la présentation de fiches telles que celles désignées par la réf. 2. De façon connue, un tel tableau 1 forme ou comporte des colonnes verticales 3 de fentes ou crevés 4, qui sont disposés parallèlement entre eux selon une orientation horizontale. De préférence, les fentes 4 de deux plages ou colonnes adjacentes 3 sont alignées selon des mèmes niveaux horizontaux.

Un panneau ou tableau 1 peut comporter des fentes 4 identiques ou éventuellement des fentes de longueur horizontale différente selon qu'il est prévu de disposer sur un tel tableau des fiches de mème format ou de format différent.

Pour faciliter l'engagement ou le retrait de fiches 2, chaque fente 4 est en général formée par une partie 5 décalée latéralement de manière que les deux lèvres de la fente soient disposées en déport relatif afin de délimiter entre elles une ouverture accessible en introduction verticale du haut vers le bas. Une telle conformation apparaît plus nettement à la fig. 5 qui représente une coupe transversale locale montrant justement la partie 5 décalée latéralement par rapport au plan général de la plage ou de la colonne 3.

La partie 5 peut ètre réalisée de nombreuses façons différentes selon la nature de la matière constitutive de la plage ou colonne 3. La conformation peut ètre obtenue par emboutissage - découpage dans le cas de réalisation en feuille métallique ou tôle ou également directement par moulage dans le cas de construction en matière plastique.

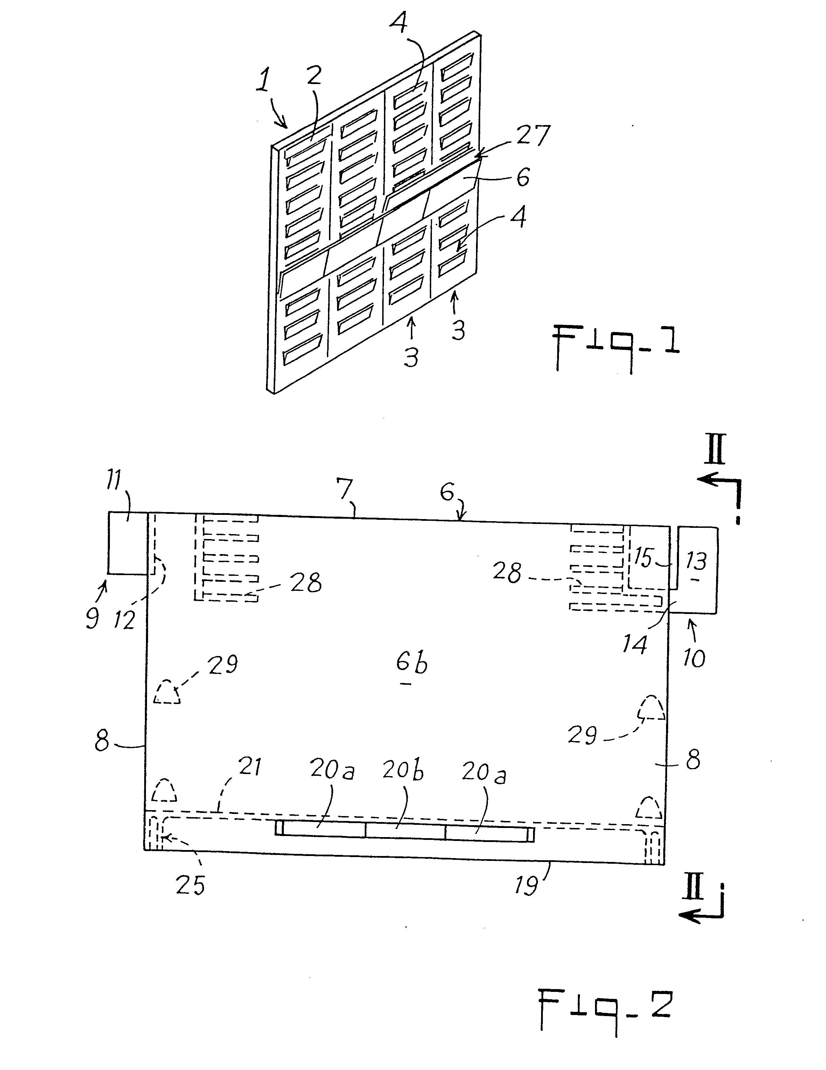

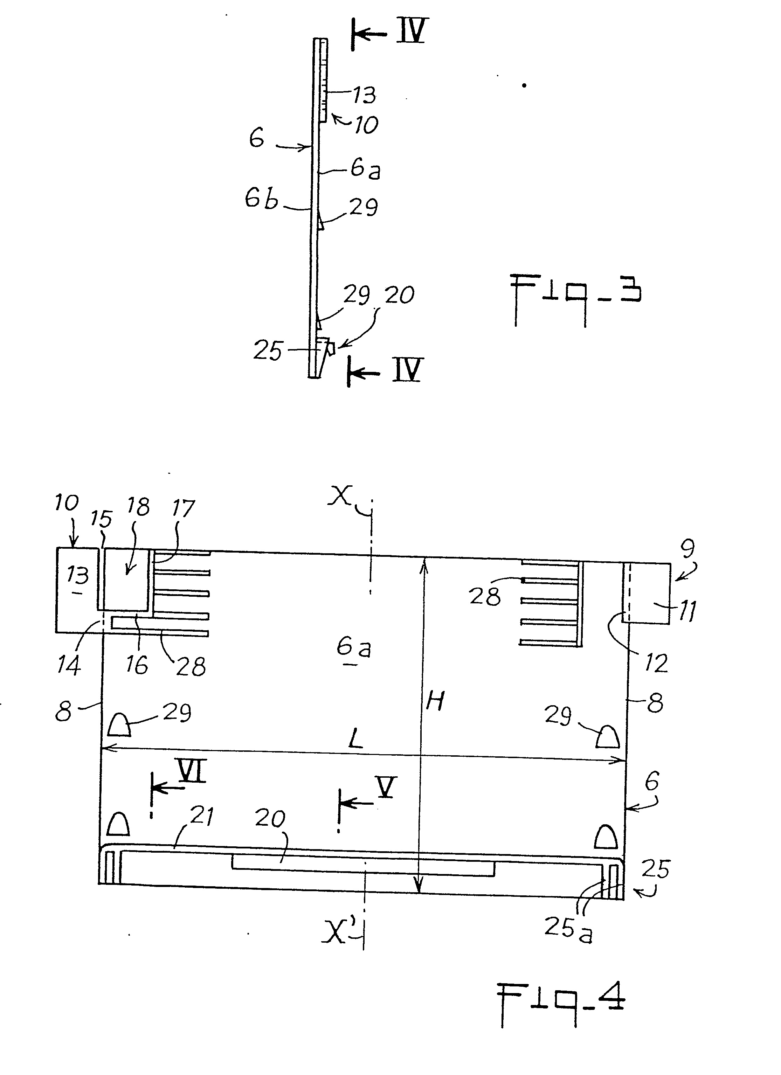

La plaquette de transformation adaptable sur un tableau tel que celui rappelé ci-dessus, est constituée, comme cela apparaît aux fig. 2, 3 et 4 par un corps plan 6 de forme générale rectangulaire pouvant ètre réalisé en toute matière appropriée, éventuellement en tôle, et de préférence en matière plastique. Dans un tel cas, le corps plan 6 peut, par exemple, présenter une épaisseur comprise entre 1mm et 1,5mm selon la nature de la matière constitutive utilisée pour le réaliser.

Le corps plan 6 comporte, dans l'alignement de son bord supérieur 7 et à partir de ses côtés latéraux verticaux 8, deux pattes ou oreilles d'assemblage 9 et 10 qui sont réalisées de façon mutuellement complémentaire. La patte 9 est constituée sous la forme d'un prolongement 11, par exemple rectangulaire, aligné avec le bord supérieur 7 et décalé de son épaisseur par rapport à la face arrière 6a du corps plan 6 auquel il est raccordé par un pied de liaison 12.

La patte d'assemblage 10 est constituée par un prolongement 13 qui est relié par un tenon 14 au bord 8 correspondant de telle manière que ce prolongement soit séparé du bord 8 par une fente 15 dont la hauteur et la largeur correspondent aux dimensions du pied 12 de la patte 9. La patte 10 est également décalée latéralement de son épaisseur par rapport au corps 6 sur la face arrière 6a duquel le tenon 4 se prolonge pour former un rebord 16 se raccordant à la base d'une moulure 17 aboutissant sensiblement au niveau du bord supérieur 7. La moulure 17, le rebord 16 et le bord correspondant de la patte 10 délimitent ainsi un logement 18 de même conformation que la patte 9 et ouvert à partir du bord supérieur 7.

Le corps plan 6 comporte également, parallèlement et en retrait de son bord inférieur 19, une barrette d'engagement 20 s'étendant en direction du bord 19 de façon décalée par rapport au plan du corps 6. La barrette 20 s'étend, de préférence, de façon générale, parallèlement au plan du corps 6 et à partir d'une nervure 21 formée perpendiculairement à partir de la face arrière 6a dudit corps. La barrette d'engagement 20 présente, de préférence, une section croissant de son extrémité vers la nervure 21. La fig. 5 montre que la barrette 20 possède, dans l'exemple illustré, une hauteur inférieure à la mesure séparant la nervure 21 du bord inférieur 19. De façon générale, la longueur de la barrette 20, qui s'étend également de part et d'autre de l'axe vertical médian X-X', est inférieure à la longueur des fentes 4 et, en règle générale, inférieure à la plus petite dimension normalisée de ces dernières.

La fig. 5 montre, par ailleurs, que la barrette 20 présente, dans sa partie angulaire de raccordement avec la nervure 21, une feuillure 22 délimitée par une face 23 parallèle au plan de la nervure 21 et une face 24 qui est inclinée de façon divergente par rapport au plan de la face arrière 6a en direction du bord supérieur 7. Une telle inclinaison, représentée au dessin par le signe $\propto$, peut être comprise, par exemple, entre 10 et 15°.

La face arrière 6a du corps 6 est prolongée également, à partir du bord inférieur 19 et sensiblement au niveau des côtés verticaux 8, par deux talons de butée 25 dont le bord 26 de chacun d'eux repré - sente une face d'appui dont la fonction apparait dans ce qui suit. Chaque bord 26 affecte, par rapport au plan de la face arrière 6a, une inclinaison $\propto$ égale à celle de la face 24 de la feuillure 22. De préférence, les talons 25 sont reliés entre eux par l'intermédiaire de la nervure 21.

La fig. 4 montre que, de façon préférée, chaque talon 25 est constitué par deux parties saillantes 25a s'étendant parallèlement l'une à l'autre et formant ainsi deux faces d'appui 26a disposées parallèlement l'une à l'autre.

La plaquette décrite ci-dessus est destinée à représenter un accessoire adaptable sur un panneau ou tableau 1. L'adaptation s'effectue au niveau d'une fente 4 libre dans laquelle la barrette 20 est engagée par son bord libre . L'engagement progressif de la barrette soumet les lèvres de la fente à une déformation élastique accroissant le déport latéral de la partie 5. La réaction à cette déformation élastique provoque en fin d'engagement le retour automatique des rives dans l'alignement initial et leur engagement respectivement dans la feuillure 22 et dans la partie angulaire rentrante entre la barette 20 et la nervure 21.

Dans cette position représentée à la fig. 5, la face d'appui 24 de la feuillure 22 détermine l'alignement du corps 6 par rapport au plan de la plage ou de la colonne 3, de sorte que la plaquette se trouve décalée en formant un angle de la valeur $\alpha$ par rapport audit plan. Dans cette position également, le bord inférieur 19 est sensiblement en appui au niveau de la base de la partie 5 alors que simultanément les faces d'appui 26 des talons 25 sont en application sur la plage ou colonne 3 bordant la partie 5 constituant ou délimitant la fente 4.

La plaquette est ainsi immobilisée dans une position stable verticale dans les deux sens par l'intermédiaire de la barrette 20, de la nervure 21, et de la feuillure 22. L'immobilisation horizontale est assurée par l'intermédiaire des pieds 25 qui sont destinés, le cas échéant, à coopérer avec les bords naissant de la partie 5 déportée latéralement et constitutive de la fente 4.

Dans cette position illustrée à la fig. 1 et par la coupe selon la fig. 5, la plaquette s'étend en faisant un angle ouvert vers le haut par rapport au plan du panneau, de sorte que la section supérieure peut facilement recevoir un document quelconque glissé entre la face arrière 6a et la face avant du panneau 1 pour être amené en appui sur le bord supérieur 21a de la nervure 21. Un tel document est donc, dans tous les cas, d'une mise en place et d'un accès facile pour l'utilisateur puisque l'ouverture de l'angle $\alpha$ au niveau du bord supérieur 7 de la plaquette fournit un accès pratique pour la mise en place et le retrait.

Lorsque l'utilisateur désire prolonger la case de rangement constituée ainsi par la plaquette montée comme dit ci-dessus, il assure l'adaptation d'une seconde plaquette sur la plage ou colonne verticale contigue en procédant comme décrit précédemment. Simultanément, lors de l'engagement de la barrette 20 correspondante, il amène la patte 9 en coïncidence avec le logement 18 de la plaquette déjà mise en place. Au cours du déplacement vertical descendant, le pied de liaison 12 de la patte 9 s'engage dans la fente 15 et simultanément la patte 9 s'introduit dans le logement 18. La fig. 7 montre la coopération mutuelle des faces 9 et 10 qui réalisent un assemblage dans le même plan des deux plaquettes contigues ainsi qu'un alignement des bords supérieurs 7 par la coopération du bord inférieur de la patte 9 avec le rebord 16 du tenon 14 de la patte 10. Les deux plaquettes successives sont ainsi chacune emboîtées dans une fente des deux plages ou colonnes verticales contigues en étant par ailleurs assemblées dans un même plan par l'intermédiaire des pattes 9 et 10. Les deux plaquettes constituent ensemble une gouttière ou une gorge susceptible de recevoir un support d'informations qui peut occuper une position stable ou, au contraire, être déplacé par coulissement horizontal, de manière à fournir éventuellement une information en phase avec une échelle chronologique.

La fig. 1 montre que le panneau 1 peut supporter, pour chaque niveau horizontal, autant de plaquettes accessoires qu'il délimite de plages ou colonnes verticales, de manière à former ou délimiter une gorge ou gouttière 27 couvrant toute la mesure horizontale qu'il délimite.

De préférence, le corps plan 6 possède une longueur L qui est égale ou multiple d'une largeur de base, normalisée ou non, d'une plage ou colonne verticale 3. Ceci permet une adaptation modulaire et la constitution d'une gorge ou gouttière 27 continue, partielle ou totale, avec un nombre entier de plaquettes accessoires. La hauteur H de chaque plaquette peut varier en fonction de la hauteur des supports d'informations devant être inclus.

Dans ce qui précède, il est indiqué que les pattes 9 et 10 sont décalées de leur épaisseur par rapport à la face arrière 6a. De manière à permettre un coulissement aisé et sans obstacle des supports d'informations dans les gouttières 27, il est prévu de faire venir sur la face arrière 6a des rampes de guidage 28 inclinées et prenant naissance à partir de la face 6a pour aboutir à un niveau égal à celui des pattes 9 et 10. De la sorte, comme cela apparait à la fig. 7, les rampes 28 représentent des guides de part et d'autre des pattes 9 et 10 assemblées et assurent un coulissement libre possible des documents, fiches, bandes ou autres supports dans les gouttières 27.
Dans le même but, la face arrière 6a de chaque corps plan 6 peut
comporter à proximité des bords 8 des saillies 29 du type convexe.

Il y a lieu de noter que les pattes 9 et 10 peuvent aussi éventuellement être décalées en saillie latéralement par rapport à la face
avant 6b du corps plan 6. Dans un tel cas, alors, la face arrière ne
comporte plus les rampes 28 qui sont uniquement remplacées par les
saillies 29 le long des bords 8.

La fig. 2 montre que la barrette 20 peut être constituée par des
segments 20a qui sont séparés l'un de l'autre par une ouverture 20b
dont la longueur est au moins égale au double de la mesure existant
entre les bords verticaux des parties déportées 5 et le côté longitudinal correspondant d'une plage 3. De la sorte, il est possible de
placer une plaquette en chevauchement sur deux colonnes contigues 3,
notamment, lorsque chacune d'elles comporte des fentes 4 d'une longueur égale à la moitié de la longueur L du corps plan 6.

Ainsi que cela ressort de ce qui précède, la plaquette selon l'invention représente un accessoire de faible prix de revient et d'un encombrement minimal facilitant le stockage. Un utilisateur peut donc
disposer d'un jeu de plaquettes et procéder à l'adaptation rapide et
facile sur un tableau 1 lorsqu'il souhaite faire assumer à ce dernier,
totalement ou partiellement, une fonction supplémentaire de support
à gouttières ou à gorges pour une présentation d'informations à variations linéaires, séquentielles ou chronologiques.

Le retrait de chaque plaquette peut être obtenu également facilement en exerçant au niveau de la barrette 20 un effort dans le sens
de la flèche $f_1$ visant à déformer élastiquement la partie 5 correspondante en accentuant le déport latéral pour permettre le dégagement de la face 23 de la feuillure 22 par rapport à la rive supérieure de la fente 4 correspondante.

Les plaquettes selon l'invention sont donc d'une réutilisation possible et leur mise en oeuvre momentanée permet de transformer,
au moins localement, un panneau de présentation de fiches qui

peut être réutilisé totalement ensuite dans sa fonction première, si cela est souhaité.

L'invention n'est pas limitée aux exemples de réalisation représentés et décrits en détail  car diverses modifications peuvent y être apportées sans sortir de son cadre.

REVENDICATIONS :

1 - Plaquette adaptable sur un panneau d'affichage et du type comprenant un corps plan muni sur sa face arrière d'une barrette s'étendant en retrait du bord inférieur dudit corps, caractérisée en ce que, dans le but de permettre son adaptation sur un panneau de présentation de fiches du type dit en T présentant, à cet effet, des plages verticales parallèles de fentes horizontales superposées, elle comprend un corps plan dont la mesure horizontale est au moins égale à la longueur horizontale des fentes d'une plage et qui comporte :

> - sur ses bords verticaux latéraux deux pattes d'assemblage mutuellement complémentaires,
> - une barrette s'étendant à distance de la face arrière du corps plan en étant orientée vers le bord inférieur et possédant une hauteur inférieure à la distance comprise entre le bord inférieur et le bord supérieur de la barrette,
> - et sur sa face arrière deux talons de butée bordant les côtés verticaux latéraux et dont les faces d'appui divergent par rapport à la face arrière depuis le bord inférieur en direction du bord supérieur du corps plan.

2 - Plaquette selon la revendication 1, caractérisée en ce qu'elle est réalisée sous la forme d'un corps plan comportant une barrette s'étendant à partir d'une nervure faisant saillie à partir de la face arrière du corps plan et parallèlement et à distance du bord inférieur dudit corps, ladite barrette présentant, dans sa partie angulaire extérieure de raccordement avec la nervure, une feuillure délimitée par une face de butée parallèle au plan de la nervure et par une face présentant une inclinaison de même valeur et de même orientation que celle des faces d'appui des talons de butée.

3 - Plaquette selon la revendication 1 ou 2, caractérisée en ce qu'elle est réalisée sous la forme d'un corps plan comportant une barrette offrant une section croissante de son bord inférieur vers la nervure d'attache.

4 - Plaquette selon la revendication 2, caractérisée en ce que la barrette s'étend à partir d'une nervure reliant les deux talons de butée qui présentent entre eux un écartement supérieur à la longueur d'une fente et font saillie d'une mesure moyenne au moins égale au déport latéral de la partie du panneau délimitant la fente.

5 - Plaquette selon l'une des revendications 1 à 4, caractérisée en ce que la barrette est constituée par au moins deux segments distants l'un de l'autre d'une mesure égale à la distance séparant deux fentes alignées sur un même niveau horizontal d'un panneau de présentation.

6 - Plaquette selon la revendication 1, caractérisée en ce que les pattes d'assemblage prolongeant les côts verticaux du corps plan sont décalées de leur épaisseur à partir de la face arrière du corps plan et sont raccordées à ladite face par des rampes inclinées.

7 - Plaquette selon la revendication 6, caractérisée en ce que les pattes d'assemblage complémentaires sont emboîtables pour deux plaquettes contiguës par coulissement vertical relatif descendant et établissent un maintien dans un même plan desdites plaquettes contiguës.

8 - Plaquette selon la revendication 6 ou 7, caractérisée en ce qu'elle comporte deux pattes d'assemblage, dont l'une délimite avec le corps plan un logement qui est limité vers le bas par un rebord formant butée d'engagement pour la patte complémentaire d'une plaquette contiguë.

9 - Plaquette selon la revendication 1, caractérisée en ce que la face arrière du corps plan forme des saillies à proximité des deux côtés verticaux.

10 - Panneau de présentation de fiches offrant des plages verticales parallèles de fentes horizontales dont certaines, alignées sur un même niveau, sont associées, pour former des gouttières ou gorges de réception de supports d'informations, à des plaquettes selon l'une des revendications 1 à 9, emboîtées chacune par sa barrette dans une fente.

Fig-1

Fig-2

Fig_3

Fig_4

0039302

Fig_5

Fig_6

Fig_7

## Office européen
## des brevets

# RAPPORT DE RECHERCHE EUROPEENNE

EP 81 42 0063

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendication concernée | |
| A | FR - A - 961 264 (G. BERLINE)<br><br>* Résumé 1,2C et D; page 2, lignes 58-70; figures 1,2,4, 5 *<br><br>-- | 1 | G 09 B 29/00<br>G 09 F 7/06 |
| A | GB - A - 318 093 (W.G. HORTON)<br><br>* Revendications 1,2; page 4, lignes 83-97; page 3, lignes 107-129; figures 1-6 *<br><br>-- | 1,5 | |
| A | CH - A - 409 490 (RUEGG-NAEGELI & CIE)<br><br>* Revendication; sous-revendi- cations 2,4; page 1, ligne 51 - page 2, ligne 2; figure *<br><br>-- | 1 | **DOMAINES TECHNIQUES RECHERCHES (Int. Cl.³)**<br><br>G 09 B 29/00<br>G 09 F 7/06<br>7/08<br>15/00 |
| A | US - A - 4 003 470 (NATIONAL CRE- ATIVE MERCHANDISING)<br><br>* Revendications 1,2,7; colon- ne 3, lignes 3-43; figures 1-5 *<br><br>---- | 1 | |

**CATEGORIE DES DOCUMENTS CITES**

X: particulièrement pertinent

A: arrière-plan technologique

O: divulgation non-écrite

P: document intercalaire

T: théorie ou principe à la base
de l'invention

E: demande faisant interférence

D: document cité dans
la demande

L: document cité pour d'autres
raisons

&: membre de la même famille,
document correspondant

Le présent rapport de recherche a été établi pour toutes les revendications

| Lieu de la recherche | Date d'achèvement de la recherche | Examinateur |
|---|---|---|
| La Haye | 06-08-1981 | FRANSEN |

OEB Form 1503.1   06.78